**Europäisches Patentamt**

**European Patent Office**

**Office européen des brevets**

(11) Veröffentlichungsnummer: **0 219 126**
A2

## (12) EUROPÄISCHE PATENTANMELDUNG

(21) Anmeldenummer: 86114340.2

(22) Anmeldetag: 15.10.86

(51) Int. Cl.⁴: **B 60 S 1/48**

(30) Priorität: 15.10.85 DE 3536751

(43) Veröffentlichungstag der Anmeldung:
22.04.87 Patentblatt 87/17

(84) Benannte Vertragsstaaten:
AT BE CH DE ES FR GB GR IT LI LU NL SE

(71) Anmelder: Alligator Ventilfabrik GmbH
Alleenstrasse 1
D-7928 Giengen/Brenz(DE)

(72) Erfinder: Scheibe, Wolfgang, Dr.
Odenheimstrasse 11
D-7140 Ludwigsburg 12(DE)

(72) Erfinder: von Zabern, Werner
Herbrandtstrasse 14
D-7928 Giengen/Brenz(DE)

(74) Vertreter: Hiebsch, Gerhard F., Dipl.-Ing.
Hiebsch & Allgeier Patentanwälte Erzbergerstrasse 5A
Postfach 464
D-7700 Singen 1(DE)

(54) Heizvorrichtung für Waschflüssigkeit in Scheibenwaschanlagen von Fahrzeugen.

(57) Eine Heizvorrichtung für Waschflüssigkeit in Scheibenwaschanlagen soll so verbessert werden, daß bei ausreichender Energiebilanz die Betriebssicherheit auch bei vollautomatischem Betrieb gewährleistet und zudem die Heizvorrichtung selbst so klein bemessen ist, daß sie ohne weiteres im Fahrzeug untergebracht werden kann. Zudem soll diese Heizvorrichtung auch der Nachrüstung älterer Fahrzeuge dienlich sein.

Hierzu ist ein hohler Körper (50) mit in die Flüssigkeitsleitung einbezogenem Innenraum zumindest an einer Oberfläche mit einer wärmeleitenden, elektrisch isolierenden Schicht versehen und ein Heizdraht, ein Heizband (59) od. dgl. um diesen Tragkörper gewickelt, wobei den Heizdraht od. dgl. eine zum Tragkörper parallele Schutzhülse (60) umgibt, die zumindest an ihrer Innenseite eine elektrisch isolierende und wärmeleitende Schicht aufweist. Zudem soll als temperaturfühlende Einrichtung ein Temperaturregler (63) nahe dem Innenraum und außerhalb diesem am Tragkörper festliegen.

Fig.3

EP 0 219 126 A2

## BESCHREIBUNG

Die Erfindung betrifft eine Heizvorrichtung für Waschflüssigkeit in Scheibenwaschanlagen von Fahrzeugen mit in die Flüssigkeitsleitung einbezogenem Innenraum eines Durchlaufbehälters aus einem beidends geschlossenen, Schlauch- oder Rohranschlüsse aufweisenden hohlen Körper sowie mit einem strangartigen Heizelement, das in einem von einer Stromquelle, insbesondere einer Batterie, ausgehenden, ein Schaltrelais enthaltenden Heizstromkreis vorgesehen ist, wobei dem Innenraum eine temperaturfühlende Einrichtung zugeordnet sowie an einen mit dem Schaltrelais verbundenen Steuerkreis angeschlossen ist.

Bei einer solchen dem Stand der Technik entnehmbaren Vorrichtung ist in einem von Gehäusedeckeln stirnseitig geschlossenen Gehäuserohr eine Drahtwendel angeordnet, welcher in Abstand ein Bimetallschalter, ein Reedkontakt oder ein Temperaturschalter gegenübersteht.

Letzterer ist einerseits beispielsweise an die Erregerklemme einer Lichtmaschine angeschlossen sowie anderseits an ein Schaltrelais, mit dem ein Schalter im Heizstromkreis betätigt wird. Der Temperaturfühler mag auch unmittelbar im Heizstromkreis untergebracht, also beispielsweise in die Drahtwendel, integriert werden.

Temperaturfühler und strangartiges Heizelement sind hier beide im Flüssigkeitsströmungsraum untergebracht, was zu Schwierigkeiten im Betrieb führen kann.

Eine andere Heizvorrichtung für Waschflüssigkeiten in Scheibenwaschanlagen von Fahrzeugen bietet DE-AS 26 27 402 an; um einen Auspuffkrümmer des Fahrzeugmotors ist ein Durchlaufbehälter gelegt, der seinerseits Teil der Waschwasserleitung ist und innerhalb dessen Wärme vom Auspuffrohr in die Waschflüssigkeit getauscht wird.

Nach DE-OS 27 23 362 sind im Kühlwasserrohr Heizschlangen angeordnet, durch welche die Waschwasserflüssigkeit zu den Sprühdüsen gelangt.

Angesichts dieser Gegebenheiten hat sich der Erfinder das Ziel gesetzt, eine elektrisch heizbare Vorrichtung der eingangs erwähnten Art so zu verbessern, daß bei -- für Autobatterien od. dgl. -- ausreichender Energiebilanz die Betriebssicherheit auch bei vollautomatischem Betrieb gewährleistet ist und zudem die Heizvorrichtung selbst so klein bemessen ist, um ohne weiteres im Fahrzeug untergebracht werden zu können. Darüber hinaus soll diese Heizvorrichtung auch der Nachrüstung älterer Fahrzeuge dienen.

Zur Lösung dieser Aufgabe führt, daß der hohle Körper zumindest an einer Oberfläche mit einer wärmeleitenden, elektrisch isolierenden Schicht versehen und der Heizdraht, ein Heizband od. dgl. um diesen Tragkörper gewickelt ist, daß den Heizdraht od. gl. eine zum Tragkörper parallele Schutzhülse umgibt, die zumindest an ihrer Innenseite eine elektrisch isolierende und wärmeleitende Schicht aufweist, wobei als temperaturfühlende Einrichtung ein Temperaturregler nahe dem Innenraum und außerhalb diesem am Tragkörper festliegt.

Dabei hat es sich nach einem weiteren Merkmal der Erfindung als besonders günstig erwiesen, den Tragkörper und/oder die Schutzhülse aus Leichtmetall zu fertigen, welches einem Eloxiervorgang unterzogen worden ist; die auf dem Leichtmetall beim Eloxieren entstehende Eloxalschicht bietet alle Voraussetzungen, welche von der wärmeleitfähigen bzw. zumindest nicht wärmeleithindernden und elektrisch isolierenden Schicht verlangt werden.

Es sind jedoch ebenfalls andere Stoffpaarungen Tragkörper/ Isolierschicht bzw. Schutzhülse/Isolierschicht möglich, beispielsweise Keramikkörper mit Plasmaschicht oder Metallkörper mit thermisch aufgespritzter Kunststoffschicht oder einer dünnen Keramikschicht - in bevorzugten Ausführungen Schichten aus Aluminiumoxid oder zumindest teilweise stabilisiertem Zirkonoxid.

Dank dieser Maßgaben befindet sich kein Element des Heizstromkreises innerhalb wasserführender Räume; bevorzugt ist zur Erhöhung der Wirksamkeit des Heizdrahtes in die Außenfläche des Tragkörpers eine mit jener Eloxalschicht ausgekleidete schraubenlinienförmige Nut eingebracht, in welche der Heizdraht eingebettet ist und zwar so, daß ein

0219126

Teil seines Umfanges die Nutwand berührt. Darüber hinaus soll der Heizdraht -- oder auch das Heizband -- mit dem Tragkörper -- gegebenenfalls auch mit der Schutzhülse -- verklebt sein.

Als günstig hat es sich erwiesen, den Tragkörper als eine Ringwand mit eine von deren Stirnenden abschließendem Sockel auszubilden, wobei die Ringwand an ihrem anderen Ende mit einem Abschlußdeckel lösbar dicht verbunden ist, bevorzugt unter Zwischenschaltung eines O-Ringes.

Um eine sichere Lage des Temperaturreglers außerhalb des Innenraumes des Tragkörpers anbieten zu können, ist im Sockel eine Querbohrung für den Temperaturregler vorgesehen, welcher in dieser in aureichender Nähe zum Wasserstrom lagert, um mit großer Genauigkeit auf die Flüssigkeits-Temperatur anzusprechen - erfindungsgemäß beträgt die Abschalttemperatur 75$^\circ$C für eine Temperatur an der Spritzdüse von 80$^\circ$C. Dieser Temperaturregler ist bevorzugt einereits mit dem Steuerkabel sowie andererseits mit dem Minuspol der Batterie verbunden.

Um den Flüssigkeits- oder Waschwasserstrom in die Nähe des Temperaturreglers zu führen bzw. an die Stelle der Sockelinnenfläche, nahe deren der Temperaturregler im Sockel liegt, befindet sich vorteilhafterweise im Innenraum des Tragkörpers eine umlenkende Schikane, zudem soll im Innenraum eine Einrichtung vorgesehen sein, welche eine Verwirbelung des Wassers erzielt und damit eine Vergrößerung der wärmeaufnehmenden Oberfläche schafft.

Als umlenkende Schikane kann beispielsweise sogar eine den Eintrittsstutzen für die Flüssigkeit fortsetzende und zur Innenfläche des Tragkörpers führende Leitung angebracht sein, welche auch eine Verwirbelung des Wassers erzeugt.

A-136 /EPA

**0219126**

Als günstig hat es sich erwiesen, im Innenraum des Tragkörpers eine radial angeordnete Leitscheibe mit exzentrischer·Durchgangsbohrung vorzusehen und nahe dem Sockel anzuordnen; hierdurch wird der Flüssigkeitsstrom vom Flüssigkeitsdurchlaß radial zur Wandung des Tragkörpers geführt
und durch die Durchgangsbohrung verwirbelt. Ist diese
Durchgangsbohrung zusätzlich noch nahe dem Temperaturregler angeornet, geschieht die Führung des Wasserstroms
in der gewünschten und vorbeschriebenen Weise.

Zur Vereinfachung des Zusammenbaus, Verminderung des Bauvolumens und Handhabungsverbesserung dient die Maßgabe,
daß die Rohranschlüsse koaxial in den Sockel und den Abschlußdeckel integriert sowie Halterungen für Anschlußbügel des Heizstromkreises und Anschlußzungen einer Steuerleitung sind, wobei Heizdraht bzw. Heizband an jene Anschlußbügel angeschlossen ist. Zudem sollen die Anschlußbügel und
Anschlußzunge/n auf einem gemeinsamen Rohranschluß sitzen,
gegenüber diesem sie durch eine Isolierschicht des Rohranschlusses elektrisch isoliert sind unter Zwischenschaltung
radial aufgeschobener Isolierscheiben.

Eine unerwünschte Überhitzung wird durch Einbau einer
Schmelzsicherung oder eines entsprechenden, bei etwa $180^{o}C$
ansprechenden Sicherungselementes verhindert, welche/s
zwischen dem Anschlußbügel des Heizstromkabels einerseits
und dem Heizdraht, Heizband od. dgl. anderseits angeordnet
ist.

Nach einem weiteren Merkmal der Erfindung ist im Heizstromkreis ein Schalter als Teil des Schaltrelais vorgesehen, welches in die Steuerleitung zwischen Lichtmaschine
und Temperaturregler eingefügt ist. Zudem ist es nach einem
besonderen Ausführungsbeispiel beabsichtigt, einen·Aus-

A-136 /EPA

0219126

schalter zwischen Lichtmaschine und Schaltrelais einzubauen, um die gesamte Einrichtung unterbrechen zu
können.

Der geschilderte Tragkörper wird erfindungsgemäß mit dem
Heizdraht bzw. Heizband umwickelt und dann mit der aufgeschobenen Schutzhülse fest verbunden - diese Elemente
ergeben zusammen mit den auf die Rohranschlüsse gesteckten und dort festgelegten Anschlußbügeln und Anschlußzungen eine Baueinheit, welche im Rahmen der Erfindung in
ein Gehäuse geschoben wird, letzteres besteht aus einer
beidends durch Stirnwände verschlossenen Rohrwandung,
die von den Rohranschlüssen und den Anschlußbügeln bzw.
Anschlußzungen durchsetzt ist; die Einbaueinheit hängt an
den Rohranschlüssen in den Stirnwänden dieses Gehäuses und
damit in Abstand zu der Innenseite der Rohrwandung, was die
gewünschten Effekte zusätzlich erhöht.

Im Rahmen der Erfindung liegt es aber auch, statt jenes
Gehäuses einen Kunststoffkörper -- bevorzugt aus lösungsmittelfreiem Epoxidharz mit Härter bzw. aus vernetztem an-
organischem/organischem Polymer mit Härter -- um jene
Schutzhülse zu gießen.

Wird der Motor des Kraftfahrzeuges angelassen, zieht die
Heizvorrichtung über die Lichtmaschine die erforderliche
Spannung ein, gleichzeitig wird von der Batterie über das
Schaltrelais der Heizstrom freigegeben. Bei erreichter
Heizleistung schaltet der eingebaute Temperaturregler über
das Schaltrelais die Stromzuführung wieder ab, ein sich
ständig wiederholender Vorgang.

Die Heizzeit beträgt nur etwa 25 sec bei 400 bis 570 Watt
Leistung, um eine Temperatur des Scheibenspritzwassers von
80°C zu erzielen. Eine schnelle und sichere Aufheizung
des Waschwasser ist damit gewährleistet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1: das Schema einer erfindungsgemäßen Vorrichtung;

Fig. 2: eine andere Ausführungsform zu Fig. 1;

Fig. 3: ein vergrößertes Detail aus Fig. 1 im Längsschnitt;

Fig. 4: eine gegenüber Fig. 3 verkleinerte Stirnansicht des Details;

Fig. 5: eine andere Ausführung des Gegenstandes der Fig. 3, vergrößert;

Fig. 6: eine Schrägsicht auf Teile der Fig. 5.

Fig. 7: ein weiteres Ausführungsbeispiel in einer Darstellung entsprechend Fig. 3.

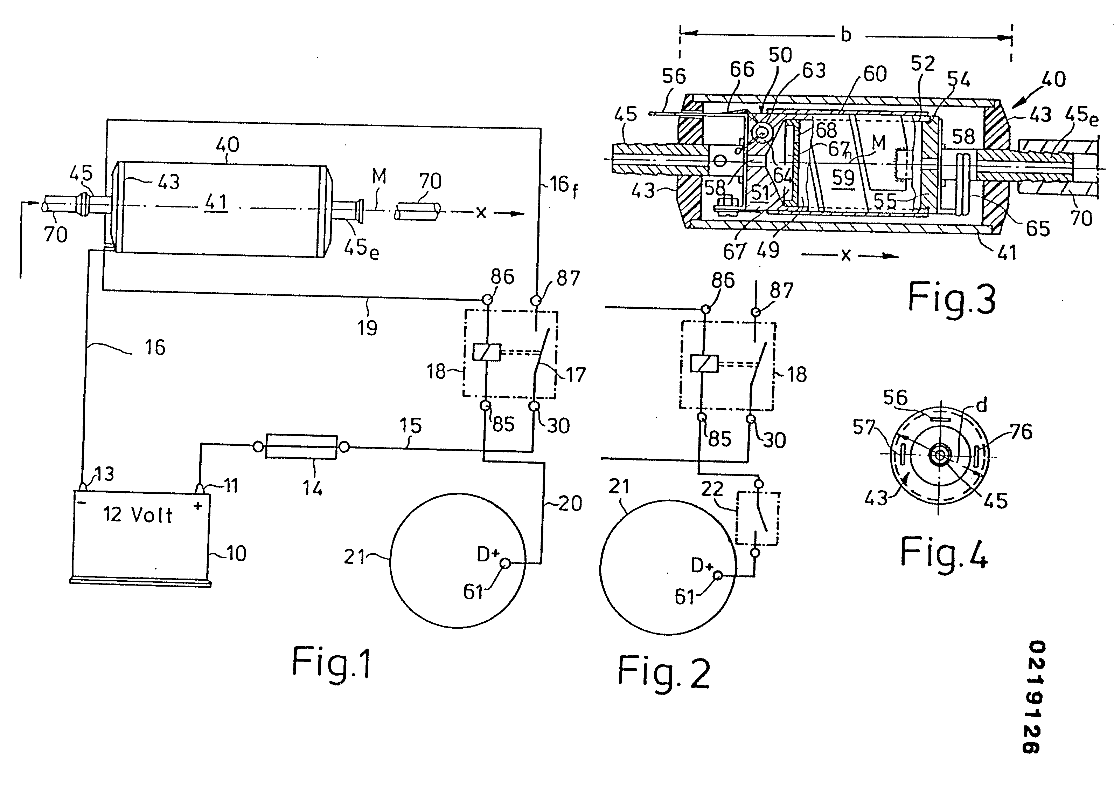

In Fig. 1 ist ein Heizstromkreis eines aus Gründen der Übersichtlichkeit nicht weiter dargestellten Kraftfahrzeuges wiedergegeben mit einer Batterie 10, von deren Polen 11 (plus) bzw. 13 -- eine Sicherung 14 einschließende -- Heizstromkabel 15 bzw. 16 ausgehen. Heizstromkabel 16 führt zu einer Heizeinrichtung 40 und verläßt diese als Heizkabel $16_f$. Zwischen dessen anderem Kontaktende 87 und jenem des Heizstromkabels 15 ist eine Schaltzunge 17 erkennbar. Letztere wird in einem bei 18 angedeuteten Relais betätigt, welches bei 86 einerseits an eine -- ebenfalls zur Heizeinrichtung 40 führende -- Steuerleitung 19, bei 85 anderseits mittels einer Leitung 20 an eine Lichtmaschine 21 angeschlossen ist, um ein schnelles Entladen der Batterie 10 zu verhindern.

Bei dem nur teilweise wiedergegebenen Ausführungsbeispiel der Fig. 2 findet sich in der bei 61 an die Lichtmaschine 21

0219126

angeschlossenen Leitung 20 ein zusätzlicher Schalter 22, dank dessen die gesamte wiedergegebene Stromführung unterbrochen werden kann.

Nicht dargestellt ist, daß bei einer Ausführungsform in die Leitung 20 ein Widerstand isoliert eingefügt sein kann, welcher sicherstellt, daß das Relais 18 nicht anzieht, solange die Lichtmaschine 21 einen Strom abgibt bzw. solange die Ladekontrollampe des Kraftfahrzeuges nicht leuchtet.

Die Heizeinrichtung 40 weist eine zylindrische Rohrwandung 41 auf, die durch scheibenförmige Stirnwände 43 zu einem Schutzgehäuse ergänzt ist. Aus diesem ragen zur Mittelachse M der Rohrwandung 41 koaxiale, die Stirnwände 43 durchsetzende Rohranschlüsse 45 und $45_e$ für bei 70 angedeutete Wasserschläuche.

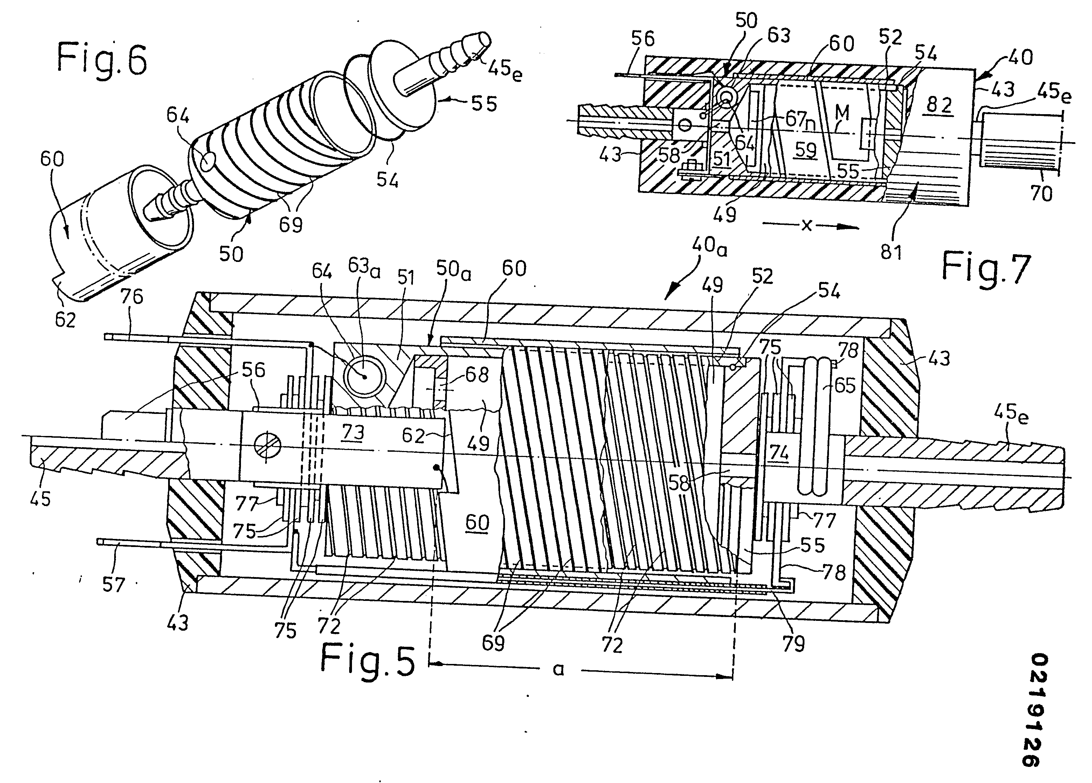

Im Schutzgehäuse aus Rohrwandung 41 und Stirnwänden 43 lagert gemäß Fig. 3 koaxial ein Tragkörper 50 aus Sockel 51 und angeformter Ringwand 52, auf deren Rohröffnung 53 unter Zwischenschaltung eines temperaturbeständigen O-Ringes 54 ein Abschlußdeckel 55 aufgesetzt ist. An letzterem sowie am Sockel 51 sind Anschlußbügel 56 bzw. 57 für die Heizstromkabel $16,16_f$ -- sowie eine Anschlußzunge (76 in Fig. 5) für die Steuerleitung 19 -- festgelegt.

Um die Ringwand 52 des Tragkörpers 50 ist ein an die Anschlußbügel 56,57 angelötetes Heizband 59 gewickelt und darauf verklebt, auf letzteres ist eine Schutzhülse 60 aufgeschoben.

In eine Querbohrung 64 des Sockels 51 ist ein Temperaturregler 63 mit Temperaturschalter 66 eingebracht und mit dem Anschlußbügel 76 für das Steuerkabel 19 und dem Anschlußbügel 56 für den Minuspol 13 leitend verbunden. Mit 65 ist eine Sicherungsbrücke bezeichnet, welche zwischen Heizband 59 und Anschlußbügel 57 eine Stromunterbrechung bei 180°C gewährleistet.

Für die Inbetriebnahme wird auf die Rohranschlüsse 45, $45_e$ jeweils das Ende eines temperaturbeständigen Wasserschlauches 70 geschoben sowie mit einer nicht dargestellten Schlauchklemme festgelegt. Der in Fig. 1 linke Wasserschlauch 70 schließt an eine in der Zeichnung nicht dargestellte Förderpumpe eines Behälters für eine Scheibenwaschflüssigkeit an, der andere Wasserschlauch 70 führt zur Spritzdüse der Kraftfahrzeugwischeranlage (Pfeil x).

Der Innenraum 49 des Tragkörpers 50 ist dank axialer Durchbrüche 58 in Sockel 51 und im Abschlußdeckel 55 in den Wasserkreislauf als Durchlaufbehälterraum integriert. In ihm ist gemäß Fig. 3 radial zur Mittelachse M wenigstens eine Leitscheibe 67 mit exzentrischer sowie nahe dem Temperaturregler 63 angeordneter Durchgangsbohrung 68 festgelegt, welche die durch Rohranschluß 45 eintretende Waschflüssigkeit zu dem den Temperaturregler 63 enthaltenden Sockelabschnitt zwingt und mit der Durchgangsbohrung 68 eine Verwirbelung erzeugt. Ein Randkragen $67_n$ der Leitscheibe 67 liegt der Innenseite des Tragkörpers 50 fest an und erlaubt so eine einfache Montage durch Einschieben.

Wird der Motor des nicht wiedergegebenen Kraftfahzeuges angelassen, zieht die Heizeinrichtung 40 über die Lichtmaschine 21 die erforderliche Spannung an und wird in Betrieb gesetzt. Von der Batterie 10 wird über jenes Schaltrelais 18 der Heizstrom freigegeben. Bei erreichter Heizleistung schaltet der -- sich der Bedienung der Scheibenwaschanlage sowie der Umgebungstemperatur anpassende -- Temperaturregler 63 über das Relais 18 die Stromzuführung wieder ab, wobei kurze Aufheizzeiten ausreichen. Der Vorgang wiederholt sich in Abhängigkeit von der benötigten Flüssigkeitsmenge stets auf das Neue.

Beim Ausführungsbeispiel $40_a$ der Fig. 5 ist das Heizband 59 durch einen Heizdraht 69 ersetzt, der ebenfalls auf einen Tragkörper $50_a$ gewickelt ist; letzterer weist zur Aufnahme des Heizdrahtes 69 an seiner Außenfläche eine schraubgewindeähnlich verlaufende Haltenut 22 auf. Die Länge a der Wicklung des Heizdrahtes 69 ist leistungsabhängig und bestimmt auch die Länge der Schutzhülse 60, nahe deren schräg geschnittener Endkante 62 eine Verbindung 73 für den Anschlußbügel 56 und Heizdraht 69 ruht. Dieser Anschlußbügel 56 ist vom Sockel 51 durch eine Isolierscheibe 75 getrennt.

Eine weitere Isolierscheibe 75 lagert zwischen dem Anschlußbügel 56 für das eine Heizstromkabel 16 und der Anschlußzunge 76 zwischen Steuerleitung 19 sowie Temperaturregelelement $63_a$. Unter Zwischenschaltung einer Isolierscheibe 57 folgt jener Anschlußzunge 76 der Anschlußbügel 57 für das Heizstromkabel $16_f$. Mit 77 ist ein Federring bezeichnet, der das Paket aus Isolierscheiben 75 und elektrischen Anschlußorganen 56,57,76 auf dem nicht leitenden Rohranschluß 45 hält. Ein solcher Federring 77 sitzt auch auf dem anderen Rohranschluß $45_e$, wo zwischen den Isolierscheiben 75 ein an den Heizdraht 69 angeschlossener Zwischenleiter 74 sowie ein mit diesem durch die Sicherungsbrücke 65 aus Schmelzdraht verbundenes leitendes U-Stück 78 lagern. Das der Sicherungsbrücke 65 ferne Ende des U-Stücks 78, ist mit einem Leitungsstreifen 79 verlötet, der andernends dem Anschlußbügel 57 fest anliegt.

Sowohl der Tragkörper 50 als auch die Schutzhülse 60 bestehen aus eloxiertem Aluminium; die sehr dünne Eloxalschicht bildet kein Hindernis für die Wärmeabfuhr, unterbindet aber einen Stromdurchschlag zur Flüssigkeit.

Aufgrund der geringen Abmessungen der Rohrwandung 41 (Länge b etwa 90 mm bei einem Durchmesser d von 35 mm) und eines geringen Montagegewichtes der Heizeinrichtung 40 von etwa 160 Gramm ist am Fahrzeug ohne weiteres ein geeigneter Einbauort für die Heizeinrichtung 40 zu finden. Diese soll -- um unnötige Wärmeverluste zu vermeiden -- so nahe wie möglich an den Spritzdüsen in deren Schlauchleitung 70 eingefügt werden. Als besonders günstig hat es sich erwiesen, an jeder Spritzdüse eine Heizeinrichtung 40 vorzusehen.

Werden die Spritzdüsen ohne Unterbrechung für längere Zeit betätigt, arbeitet die Heizeinrichtung 40 als Durchlauferhitzer für dann stetig durch Innenraum 49 strömende Waschflüssigkeit. Üblicherweise jedoch werden die Spritzdüsen nur für jeweils kurze Zeiträume von etwa 1 Sekunde betätigt, wobei die Spritzphasen kürzer sind als die Spritzpausen. Bei impulsweiser Betätigung der Spritzdüsen wird eine höhere Temperatur erreicht als bei anhaltendem Durchlaufbetrieb.

Wenn die Lichtmaschine 21 läuft, liegt an der Erregerklemme 61 der Steuerleitung 19 die erforderliche Spannung an, um die Heizeinrichtung in Betrieb zu nehmen; das Schaltrelais 18 zieht an und schaltet den elektrischen Heizstrom ein. Hat die Waschflüssigkeit eine genügend hohe Temperatur erreicht, dann unterbricht der dem Flüssigkeitsstrom naheliegende Temperaturregler 63 bzw. der Temperaturschalter 66 den Steuerstrom, das Relais 18 fällt ab, und der Heizstrom wird unterbrochen.

Während der Aufheizphase liegt der erforderliche Strom bei etwa 48 Ampere. Nach einer Aufheizdauer von etwa 25 sec aus dem kalten Zustand wird die Abschalttemperatur von etwa 75° erreicht. Durchzieht die Heizeinrichtung40 bei Spritzdüsenbetätigung kalte Waschflüssigkeit, dann wird sofort nachgeheizt. Die Waschflüssigkeit wird also immer auf ausreichend hoher Temperatur gehalten.

Als Sicherung gegen ungewolltes Aufheizen ist anzusehen, daß durch das Abstellen des Motors auch die Heizeinrichtung 40 abgeschaltet wird. Ist der Temperaturregler 63 defekt oder das Relais 18 verklebt, gewährleistet die Sicherungsbrücke 65 eine Stromunterbrechung.

Die Heizleistung der bevorzugten Ausführungsform liegt zwischen 400 Watt und 570 Watt.

Beim Ausführungsbeispiel der Fig. 7 sind die Schutzhülse 60 sowie die aus ihr ragenden Vorrichtungsteile in einen schlagfesten Kunststoffhülle 81 mit zylindrischer Außenfläche 82 eingegossen. Der Werkstoff hierfür ist ein lösungsmittelfreies Epoxidharz niedriger Viskosität mit niederviskosem Polyaminhärter und zeichnet sich durch eine niedrige Ausgangsviskosität, gute thermische und chemische Beständigkeit sowie durch geringe Rißanfälligkeit aus. Die Shore Härte D beträgt in der gewählten Ausführungsform etwa 25, die Dielektrizitätskonstante (50 Hz; 50°C) etwa 8,5 und die elektrische Durchschlagfestigkeit (20-s-Wert) zwischen 200 und 250 kV/cm. Die Dichte der Kunststoffhülle 81 liegt zwischen 0,1 und 0,4 g/cm$^3$.

Vernetzte anorganische/organische Polymere eines hier bevorzugt verwendeten Zweikomponenten-Systems einer Mischung von etwa 100 Gewichtsteilen Harz mit etwa 30 Gewichtsteilen Härter und einer Aushärtzeit von etwa sechs Stunden eignen sich für Gebrauchstemperaturen bis etwa 375°C.

A-136 /EPA

0219126

Als Kunststoffummantelung -- oder in Ergänzung der oben beschriebenen Kunststoffhülle 81 -- wird bei anderen Ausführungen ein elastischer, nichtbrennbarer, sehr leichter Isolierschaum mit feinporiger, zelliger Struktur verwendet, der frei von organischen Bindemitteln ist. Sein Schmelzpunkt liegt etwa bei 1500°C, seine Wärmeleitfähigkeit (in W/mK) bei 350°C beträgt 0.105.

Dieser Werkstoff ist wasserabweisend, ohne kapillare Saugfähigkeit sowie seewasser- und ölbeständig.

· P A T E N T A N S P R Ü C H E

============================

1. Heizvorrichtung für Waschflüssigkeit in Scheibenwaschanlagen von Fahrzeugen mit in die Flüssigkeitsleitung einbezogenem Innenraum eines Durchlaufbehälters aus einem beidends geschlossenen, Schlauch- oder Rohranschlüsse aufweisenden hohlen Körper sowie mit einem strangartigen Heizelement, das in einem von einer Stromquelle, insbesondere einer Batterie, ausgehenden, ein Schaltrelais enthaltenden Heizstromkreis vorgesehen ist, wobei dem Innenraum eine temperaturfühlende Einrichtung zugeordnet sowie an einen mit dem Schaltrelais verbundenen Steuerkreis angeschlossen ist,

dadurch gekennzeichnet,

daß der hohle Körper $(50,50_a)$ zumindest an einer Oberfläche mit einer wärmeleitenden, elektrisch isolierenden Schicht versehen und der Heizdraht (69),ein Heizband (59) od. dgl. um diesen Tragkörper gewickelt ist, daß den Heizdraht od. dgl. eine zum Tragkörper parallele Schutzhülse (60) umgibt, die zumindest an ihrer Innenseite eine elektrisch isolierende und wärmeleitende Schicht aufweist, wobei als temperaturfühlende Einrichtung ein Temperaturregler $(63,63_a)$ nahe dem Innenraum und außerhalb diesem am Tragkörper festliegt.

2. Heizvorrichtung nach Anspruch 1, dadurch gekennzeichnet, daß der Tragkörper (50,50$_a$) und/oder die Schutzhülse (60) aus Leichtmetall gefertigt und eloxiert sind/ist.

3. Heizvorrichtung nach Anspruch 1, gekennzeichnet durch einen metallischen Tragkörper (50,50$_a$) bzw. eine metallische Schutzhülse (60) mit aufgespritzter Keramik- oder Kunststoffschicht.

4. Heizvorrichtung nach einem der Ansprüche 1 bis 3, dadurch gekennzeichnet, daß die Außenfläche des Tragkörpers (50$_a$) mit einer eloxierten sowie schraubenlinienförmigen Nut (72) versehen ist, in welche der Heizdraht (69) eingebettet ist, wobei gegebenenfalls zumindest die Hälfte des Heizdrahtumfanges die Nutwand berührt und/oder der Heizdraht (69) od. dgl. mit dem Tragkörper (50,50$_a$) -- gegebenenfalls auch mit der Schutzhülse (60) -- verklebt ist.

5. Heizvorrichtung nach einem der Ansprüche 1 bis 4, dadurch gekennzeichnet, daß der Tragkörper (50,50$_a$) aus einem Sockel (51) mit Ringwand (53) besteht, welche endwärts mit einem Abschlußdeckel (55) lösbar dicht verbunden ist, wobei bevorzugt der Sockel (51) in einer Querbohrung (64) den Temperaturregler (63,63$_a$) aufnimmt, welcher gegebenenfalls zwischen dem Minuspol (13) der Batterie (12) und dem Steuerkreis (19) vorgesehen ist.

3

6. Heizvorrichtung nach wenigstens einem der Ansprüche 1 bis 5, dadurch gekennzeichnet, daß im Innenraum (49) des Tragkörpers (50,50$_a$) eine den Flüssigkeitsstrom am Eintritt in den Innenraum in die Nähe des Temperaturreglers (63,63$_a$) umlenkende Schikane (67) und/oder im Innenraum (49) des Tragkörpers (50,50$_a$) eine Einrichtung zur Verwirbelung des Flüssigkeitsstromes vorgesehen ist.

7. Heizvorrichtung nach Anspruch 6, dadurch gekennzeichnet, daß wenigstens eine radiale Leitscheibe (67) mit exzentrischer Durchgangsbohrung (68) als Flüssigkeitsdurchlaß vorgesehen ist, wobei gegebenenfalls die radial angeordnete Leitscheibe (67) mit einem an der Innenfläche des Tragkörpers (50,50$_a$) anliegenden und parallel zur Längsachse des Tragkörpers verlaufenden Randkragen (67$_n$) versehen ist.

8. Heizvorrichtung nach wenigstens einem der Ansprüche 1 bis 7, dadurch gekennzeichnet, daß die Durchgangsbohrung (68) der Leitscheibe (67) dem Temperaturregler (63, 63$_a$) bzw. der den Temperaturregler aufnehmenden Zone des Sockels (51) zugeordnet ist, und/oder daß Tragkörper (50,50$_a$) und/oder Leitscheibe (67) aus einem Aluminiumputzen auf dem Wege des Fließpressens hergestellt sind.

9. Heizvorrichtung nach einem der Ansprüche 1,6 oder 8, dadurch gekennzeichnet, daß dem Temperaturregler (63) ein Temperaturschalter (66) zugeordnet ist.

4

10. Heizvorrichtung nach wenigstens einem der Ansprüche 1 bis 9, dadurch gekennzeichnet, daß die Rohranschlüsse (45, $45_e$) koaxial in den Sockel (51) und den Abschlußdeckel (55) integriert und Halterungen für Anschlußbügel (56,57) des Heizstromkreises (15,16) sowie Anschlußzunge/n (76) einer Steuerleitung (19) sind, wobei der Heizdraht (69) bzw. das Heizband (59) an jene Anschlußbügel angeschlossen ist, wobei gegebenenfalls die Anschlußbügel (56,57) und Anschlußzunge/n (76) isoliert auf einem gemeinsamen Rohranschluß (45) unter Zwischenschaltung radialer Isolierscheiben (75) sitzen.

11. Heizvorrichtung nach wenigstens einem der Ansprüche 1 bis 10, dadurch gekennzeichnet, daß im Heizstromkreis (15,16) ein Schalter (17) als Teil des Schaltrelais (18) vorgesehen und letzteres in eine Steuerleitung (19,20) zwischen Lichtmaschine (21) und Temperaturregler (63) eingefügt ist, und/oder, daß ein Schalter (22) zwischen Lichtmaschine (21) und Schaltrelais (18) vorgesehen ist.

12. Heizvorrichtung nach wenigstens einem der Ansprüche 1 bis 11, dadurch gekennzeichnet, daß zwischen dem Anschlußbügel (57) für das Heizstromkabel ($16_f$) und den Heizdraht (69) bzw. das Heizband (59) eine Schmelzsicherung (65) oder ein entsprechendes Element vorgesehen ist.

13. Heizvorrichtung nach wenigstens einem der Ansprüche 1 bis 12, dadurch gekennzeichnet, daß der Tragkörper (50) von einer Rohrwandung (41) umgeben und diese beidends durch Stirnwände (43) verschlossen ist, wobei in den Stirnwänden die sie durchsetzenden Rohranschlüsse (45,$45_e$) lagern sowie die Schutzhülse (60) in allseitigem Abstand zur Rohrwandung gehalten ist.

14. Heizvorrichtung nach wenigstens einem der Ansprüche
    1 bis 12, dadurch gekennzeichnet, daß der Tragkörper
    (50) mit seinen Installationen und einem Teil der
    Rohranschlüsse (45, 45$_e$) in eine hitzebeständige,
    isolierende Kunststoffhülle (81) eingegossen ist,
    die gegebenenfalls eine zylindrische Außenfläche (82)
    aufweist.

6

0219126

Fig.1

Fig.2

Fig.3

Fig.4

Fig.7

Fig.6

Fig.5

0219126